# FASCICULE DE BREVET EUROPEEN

(11) **EP 3 336 983 B1**
(45) Date de publication et mention de la délivrance du brevet: **15.04.2026**
(21) Numéro de dépôt: 17200714.8
(22) Date de dépôt: 09.11.2017
(51) Int. Cl.: H02B 1/21, H02G 5/02

(54) **INSTALLATION DE DISTRIBUTION ÉLECTRIQUE À BASSE TENSION**
NIEDERSPANNUNGS-STROMVERTEILUNGSANLAGE
LOW VOLTAGE ELECTRICAL DISTRIBUTION INSTALLATION

(30) Priorité: 14.12.2016 FR 1662402
(43) Date de publication de la demande: 20.06.2018
(73) Titulaire: Schneider Electric Industries SAS, 92500 Rueil-Malmaison (FR)
(72) Inventeur: LINARES, Louis, 38050 GRENOBLE (FR); PAPISETTI, Avinash, 38050 Grenoble (FR); WASNER, Olivier, 38050 GRENOBLE (FR)
(74) Mandataire: Schneider Electric

(56) Documents cités:
- EP-A2- 2 086 077
- EP-A2- 2 164 136
- WO-A2-2014/064617

## Description

### DOMAINE TECHNIQUE

La présente invention concerne le domaine des tableaux électriques fonctionnels permettant d'assurer la distribution électrique de puissance sur des appareillages ou des unités fonctionnelles.

La présente invention concerne plus particulièrement une installation de distribution électrique basse tension comprenant au moins un jeu de barres reliées électriquement d'une part à un jeu de barres d'alimentation ou à un appareillage amont de protection, et d'autre part, à des appareillages d'un équipement électrique.

### ETAT DE LA TECHNIQUE ANTERIEURE

Généralement, la distribution électrique dans les tableaux électriques basse tension est réalisée à l'aide de jeux de barre en cuivre nus ne comportant aucune protection particulière, ce qui nécessite l'installation d'écran de protection. Les jeux de barre sont maintenus dans les armoires à l'aide de plusieurs supports isolants. Le nombre de supports nécessaires est défini en fonction du niveau de tenue électro-dynamique du jeu de barre et du courant assigné sur une courte durée à respecter dans l'installation électrique considérée, et l'ensemble de ces supports restreint l'accessibilité pour effectuer les branchements sur le jeu de barre. Ces supports de jeu de barres sont donc gênants lors du câblage et perturbent la répartition du courant.

Ces supports sont conçus pour respecter le niveau de courant, les distances dans l'air, les courants de cheminement, un certain niveau de dissipation thermique en fonction de la norme, ainsi que la tenue électrodynamique nécessaire au courant de court-circuit de l'installation.

Souvent, ces supports se présentent sous la forme de traverses isolantes constituées de deux parties vissées ensemble, ces traverses étant perpendiculaires aux jeux de barre et comportant des encoches destinées à loger une partie des barres et permettant de bloquer les barres à la distance souhaitée.

On connaît le document FR2598562 A1 décrivant un jeu de barres d'un tableau de distribution d'énergie électrique, maintenu par deux montants en matériau isolant. Les extrémités des barres sont encastrées dans des logements de forme conjuguée, ménagés dans les montants, de manière à constituer une grille rigide faisant fonction de châssis de support. Dans ce document, les supports maintiennent les barres conductrices et viennent empêcher l'accessibilité de raccordement des appareillages en tous points de la barre conductrice complexifiant le raccordement des unités fonctionnelles. Les supports ne fournissent aucune protection des barres conductrices si ce n'est par l'ajout d'un simple écran de protection. Il n'intègre pas de protection directe des parties actives ainsi qu'une protection contre les arcs électriques entre les différentes phases. La solution décrite ci-dessus nécessite

l'association de plusieurs composants permettant de construire une grille rigide servant de support de barre conductrice.

On connaît également le document EP0360237 A1 décrivant une installation de distribution électrique à basse tension comprenant des conducteurs verticaux reliés électriquement d'une part à un jeu de barre d'alimentation, et d'autre part, à des appareillages d'équipement électrique. Chaque conducteur vertical est un profilé ayant en section la forme d'un H, comprenant une première et une seconde branche parallèles réunies par une branche transversale, les extrémités desdites branches parallèles étant munies de saillies se faisant face deux à deux. Les conducteurs sont isolés entre eux et
avec le reste de l'installation par des gaines. Tous ces conducteurs sont alignés dans un même plan vertical. La technique de connexion électrique nécessite l'utilisation d'une bride spécifique ajoutant un élément supplémentaire à la connexion générant des risques d'échauffement. La solution du brevet ci-dessus génère un puits de connexion non affleurant ne permettant pas l'utilisation aisé de cosses standard du commerce. Cette solution n'offre pas la compacité nécessaire aux installations et l'isolant proposé ne procure qu'une faible tenue au courant de court-circuit.

On connaît le document EP 2 086 077 A2 décrivant une installation électrique comprenant des supports isolants profilé logeant une ou plusieurs barres d'un jeu de barres. Les supports isolants peuvent comprendre des moyens de fixation à un autre support isolant adjacent, les moyens de fixation comportant un clip ou une glissière coopérant avec respectivement une glissière et un clip prévu sur un support isolant adjacent. L'ensemble formé par les supports isolants et les barres peut être fixé par les bases des supports isolants à une paroi d'une armoire électrique.

La présente invention résout ces problèmes et propose un jeu de barres, sans support intermédiaire, isolé, compact, modulaire, adaptable, robuste et qui peut être équipé d'accessoires.

### EXPOSE DE L'INVENTION

A cet effet, la présente invention a pour objet une installation de distribution électrique à basse tension selon la revendication 1.

On notera que le système complet peut âtre fixé horizontalement ou verticalement.

Selon une réalisation particulière, cette installation comporte deux traverses dites respectivement supérieure et inférieure destinées à être fixées sur leur longueur, aux extrémités des barres et de leurs supports isolants respectifs, et par leurs deux extrémités opposées, respectivement à deux montants appartenant au dispositif de logement précité.

Selon une autre réalisation, cette installation comporte au moins un ensemble de deux traverses intermédiaires, ou pattes de fixation, fixées respectivement par l'une de leurs extrémités, aux deux supports isolants situés respectivement aux deux extrémités d'un groupe de supports isolants, et par leur extrémité opposée, respectivement, à deux montants appartenant au dispositif de logement précité.

Selon une autre caractéristique, le ou chaque support isolant comporte un profile présentant une section transversale sensiblement en forme de U, ledit profilé comportant une base destinée à recevoir la barre correspondante positionnée à plat, et deux flancs s'étendant sensiblement perpendiculairement à ladite barre.

Selon une autre caractéristique, les flancs précités comportent les moyens de fixation précités.

Selon une autre caractéristique, l'un des flancs comporte un clip tandis que l'autre des flancs comporte une glissière.

Selon une réalisation particulière, les barres et leurs supports isolants associés sont disposés à plat sensiblement dans un même plan.

Selon une autre caractéristique, cette installation comporte au moins un support isolant logeant un bouchon isolant de manière à définir deux portions de barre conductrices différentes dans le même support isolant.

Selon une autre caractéristique, la ou chaque traverse comporte au niveau du raccordement à une barre, une zone de repérage apte à spécifier la valeur de la distribution de courant.

Selon une réalisation particulière, cette installation comporte un jeu de barres dit en carré comprenant deux ensembles de deux supports isolants fixés l'un à l'autre par l'une de leurs faces latérales ou flancs, ces deux ensembles étant disposés dos à dos de manière à former un carré.

Selon une autre réalisation, quatre au moins des supports isolants comportent sur l'un de leurs flancs à la fois un clip et une glissière, lesdits clip et glissière s'étendant suivant une direction sensiblement perpendiculaire l'un par rapport à l'autre, et en ce que ces quatre supports sont fixés l'un à l'autre de manière à former une croix.

Selon une autre caractéristique, cette installation comporte au moins une entretoise sous forme d'accessoire, ladite entretoise s'étendant sensiblement sur la même longueur que les barres, étant apte à être placée entre deux supports isolants adjacents et à être fixée aux deux supports isolants au moyen des mêmes moyens de fixation que s'il s'agissait d'un support isolant.

Selon une autre caractéristique, le matériau isolant dont est constitué le ou chaque support isolant est conçu de manière à favoriser la dissipation thermique liée au passage du courant.

Selon une autre caractéristique, les supports isolants sont plaqués contre une paroi d'enveloppe métallique du logement d'appareillages électriques, ladite paroi favorisant l'échange thermique vers l'extérieur de l'enveloppe.

Selon une autre caractéristique, cette installation comporte au moins un radiateur de dissipation d'énergie placé à l'intérieur d'un support isolant, à l'une des extrémités d'une barre.

Selon une autre caractéristique, cette installation comporte des moyens de fixation à un couvercle sécable et/ou à un ou plusieurs accessoires de gestion de câbles.

Selon une autre caractéristique, cette installation comporte au moins un support isolant logeant un système permettant de gérer la communication à l'intérieur du dispositif de logement précité ou bien un câble

Selon une autre caractéristique, cette installation comporte huit emplacements de supports isolants aptes à recevoir chacun un support isolant destiné à loger une barre, un câble ou un accessoire, ladite barre étant destinée à véhiculer soit une phase, soit le neutre, soit la terre, de manière à permettre la réalisation d'une installation unipolaire ou bipolaire
ou tripolaire ou tétra polaire, lesdites barres et leur support associés étant aptes à être disposés à gauche, au centre, à droite ou de manière répartie sur la largeur de l'emplacement, ladite installation pouvant comporter un double neutre ou une double distribution ou un doublage de la capacité du jeu de barres ou un mixage de la typologie du courant.

Mais d'autres avantages et caractéristiques de l'invention apparaîtront mieux dans la description détaillée qui suit et se réfère aux dessins annexés donnés uniquement à titre d'exemple et dans lesquels :
- La figure 1 est une vue en perspective illustrant une réalisation particulière d'une installation selon l'invention,
- La figure 2 est une vue en perspective illustrant la différence entre une réalisation selon un art antérieur connu et une réalisation selon l'invention,
- La figure 3 est une vue en coupe transversale du jeu de barre des figures précédentes,
- La figure 4 est une vue en perspective illustrant les barres du jeu de barres précédent dans leur support,
- La figure 5 est une vue en perspective illustrant un autre mode de réalisation de l'installation selon l'invention,
- Les figures 6 et 7, sont deux vues en perspective illustrant respectivement deux modes de réalisation de l'installation selon l'invention, et leur mise en œuvre dans un coffret électrique,
- Les figures 8,9 et 10 sont trois vues en coupe illustrant respectivement trois formes différentes de barre pouvant être reçus dans le support isolant selon l'invention,
- La figure 11 est une vue en perspective destinée à montrer la possibilité de placer un bouchon dans un support isolant selon l'invention,
- La figure 12 est une vue partielle en perspective, illustrant une extrémité de l'installation selon l'invention comportant une zone de repérage destinée à spécifier la distribution de courant,
- La figure 13, et en particulier les figures 13a à 13d, illustrent en coupe transversale, quatre agencements particuliers des barres et de leur support isolant associé, dans une installation selon une réalisation particulière de l'invention,
- Les figures 14,15 et 16 sont des vues en coupe transversale, illustrant respectivement la possibilité de mettre une entretoise entre deux supports isolants pour la figure 14, la réduction de l'espace nécessaire entre deux barres grâce à l'invention pour ce qui concerne la figure 15, et la disposition d'une installation selon l'invention dans une enveloppe métallique pour la figure 16,
- La figure 17 est une vue partielle en perspective, illustrant la disposition d'un radiateur en bout de barre dans un support isolant,
- La figure 18 est une vue partielle en perspective, illustrant la possibilité de fixer un couvercle sur le support isolant,
- La figure 19 est une vue en partie en coupe et en partie en perspective, illustrant la possibilité d'intégrer à l'installation des accessoires de câblage ou de communication, et
- La figure 20, et en particulier les figures 20a à 20g, illustrent dans des vues en coupe transversale, différents types de distribution électrique pouvant être réalisées grâce à l'installation selon l'invention.

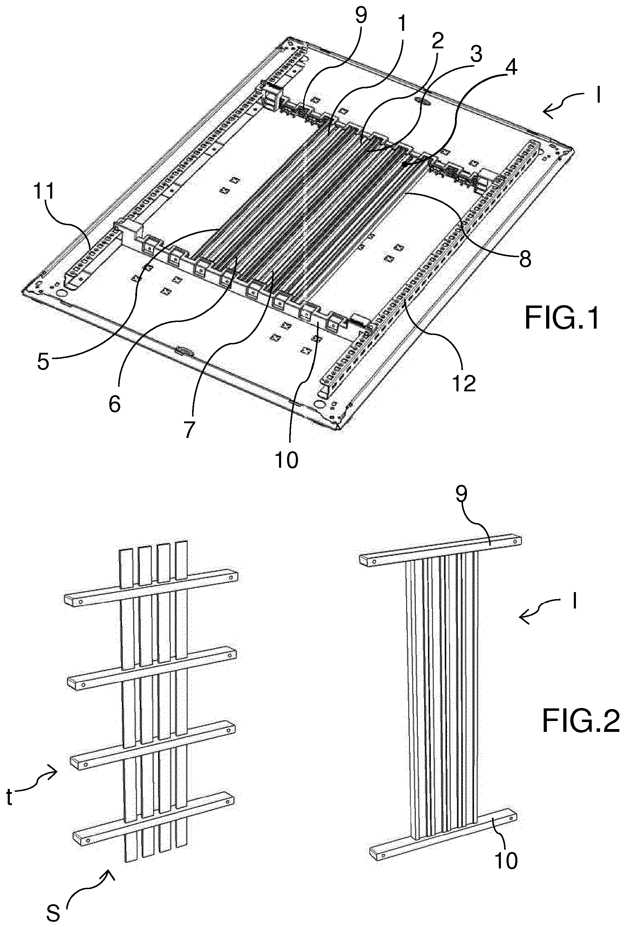

Tel qu'illustré sur la figure 1, l'installation I selon un mode particulier de réalisation de l'invention, est composé de plusieurs barres 1,2,3,4 destinées à être alignées dans un même plan, chacune des barres étant logée dans un support isolant 5,6,7,8, et de deux traverses d'extrémité 9,10 s'étendant perpendiculairement aux barres, lesdites traverses étant réalisées dans un matériau isolant, ces traverses étant destinées à être fixées sur leur longueur à l'une des extrémités des barres et à leurs supports par tout moyen approprié, et étant destinées à être fixées par leurs deux extrémités opposées respectivement sur deux montants 11,12 appartenant à un dispositif de logement d'un équipement électrique tel un coffret ou une armoire électrique.

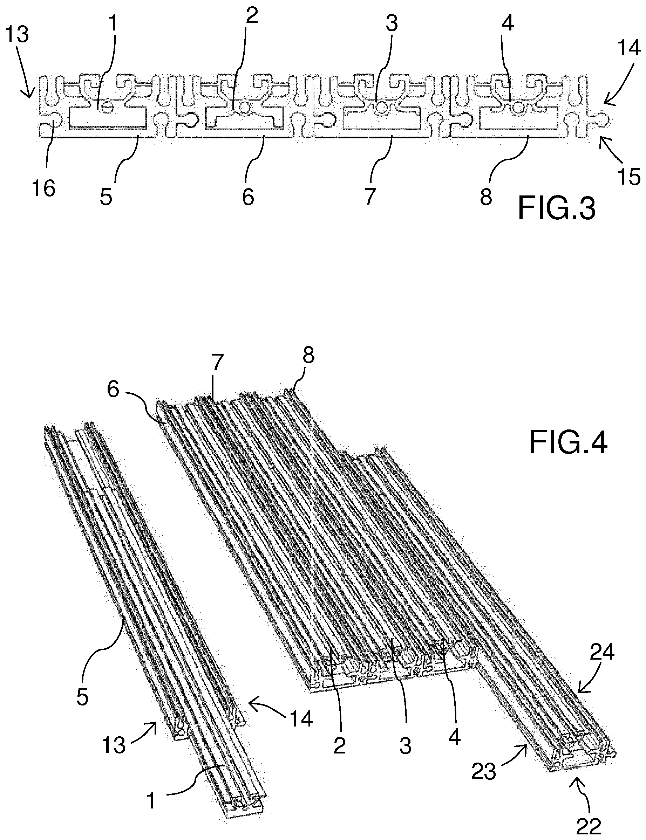

Tel qu'illustré sur les figures 2, 3 et 4, le support isolant de chacune des barres conductrices présente une section transversale en forme de V et est conçu de manière à maintenir les barres dans leur logement quelque soit la valeur du courant. Ce support isolant présente sur ses faces latérales 13,14 respectivement un clip 15 et une glissière 16 sur toute la longueur de celui- ci. Ce clip 15 et cette glissière 16 permettent, lorsque plusieurs supports sont assemblés, de tenir les barres entre elles, et d'obtenir la tenue électrodynamique nécessaire au niveau requis de l'installation.

Tel qu'illustré sur la figure 2 montrant une installation S selon l'art antérieur et une installation I selon l'invention, ce système de clip et glissière sur toute la longueur permet d'éviter la répétition des supports transversaux t plusieurs fois sur toute la longueur des barres, tel que ceci est le cas pour les jeux de barres de l'art antérieur, ce qui permet d'obtenir une accessibilité totale à la surface de connexion sur la barre.

Avantageusement, chaque support est constitué par une pièce de section transversale en forme de U, comportant une paroi de fond destinée à recevoir à plat une barre et deux parois latérales ou flancs comportant les moyens de fixation précités.

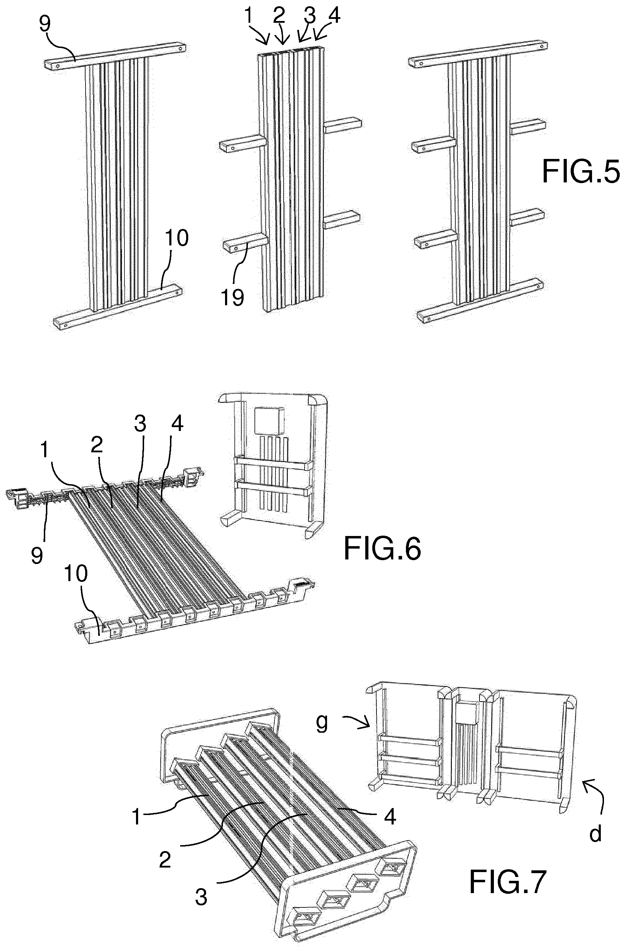

Tel qu'illustré sur la figure 5, seulement une traverse haute 9 et une traverse basse 10 sont nécessaires pour la fixation du jeu de barres dans le coffret.

Cependant, selon un autre mode de réalisation de l'invention, ces traverses haute 9 et basse 10 peuvent être remplacées par des pattes de fixation latérales 19 se fixant par un clip ou une glissière aux supports, ces clip et glissière coopérant avec respectivement une glissière ou un clip prévu dans une paroi latérale des supports isolants des barres. Dans le cas d'une grande longueur du jeu de barres, de telles pattes de fixation peuvent être utilisées afin de venir renforcer la tenue électrodynamique de l'ensemble. Les barres 1,2,3,4 peuvent être agencées de différentes manières par exemple à plat, tel qu'illustré sur la figure 6, ou bien de manière étagée tel que décrit sur la figure 7, afin de permettre de réaliser aisément une répartition vers le côté gauche g ou vers le côté droit d du jeu de barres.

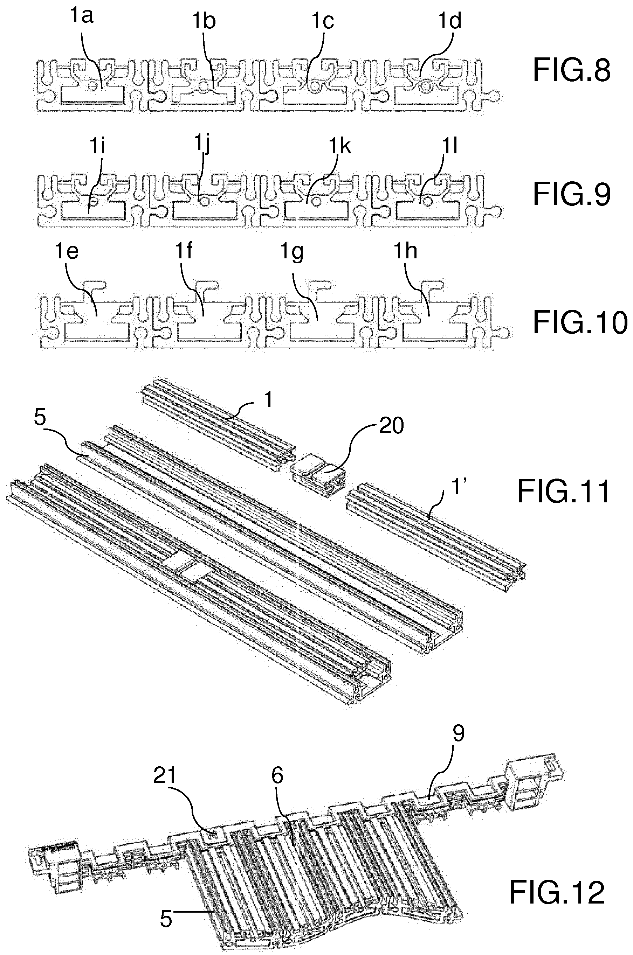

Le support isolant est conformé de manière à pouvoir recevoir des barres de différentes sections, 1a,1b,1c,1d,1e,1f,1g,1h ,tel qu'illustré respectivement sur les figures 8,9 et 10 ainsi que différents types de barres 1i,1j,1k,1l, tels qu'une barre en cuivre, une barre en aluminium, une barre en aluminium revêtu ou autres.

Tel qu'illustré sur la figure 11, un bouchon isolant 20 peut être introduit dans un support isolant 5 de barres, de manière à définir deux barres conductrices 1,1' différentes afin de répondre à différents cas de distribution électrique tel que par exemple, une arrivée et un départ avec une protection entre, les inverseurs de source, etc....

Tel qu'illustré sur la figure 12, selon une réalisation particulière de l'invention, l'une des traverses 9,10 comporte une ou plusieurs zones de repérage 21 afin de spécifier des valeurs caractéristiques de la distribution de courant.

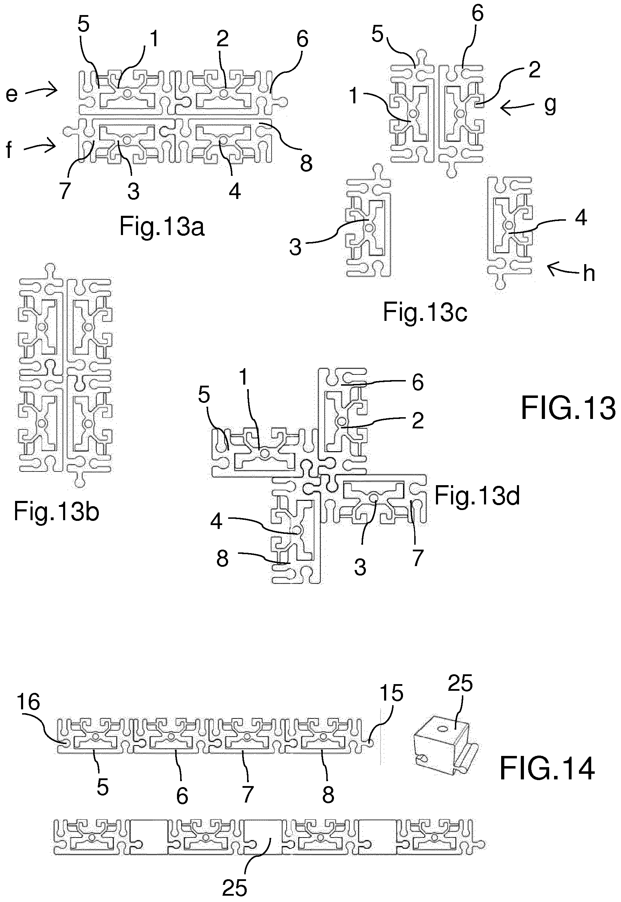

Sur la figure 13, on voit que ces supports 5,6,7,8 peuvent être associés de différentes manières afin de constituer par exemple un jeu de barres à plat, en carré ou autres types d'association des barres, en fonction du type d'installation dans laquelle ils sont susceptibles d'être disposés. Ainsi, l'on voit que sur la figure 13a, le jeu de barres selon l'invention est constitué par exemple de deux ensembles e,f de barres disposés dos à dos, chaque ensemble étant constitué par deux barres 1,2 et 3,4 et leurs supports respectifs 5,6 et 7,8 associés latéralement, les deux ensembles e, f s'étendant parallèlement l'un par rapport à l'autre, cet ensemble étant disposé horizontalement.

Sur la figure 13b, un même ensemble est disposé verticalement.

Tel qu'illustré sur la figure 13c, le jeu de barres comporte un premier ensemble g de deux barres 1,2 et leurs supports respectifs 5,6 disposés dos à dos, ainsi qu'un deuxième ensemble h comportant deux autres barres 3,4 disposés respectivement de part et d'autre de l'ensemble précité g et en dessous. Sur la figure 13d, ce jeu de barres est constitué de quatre barres 1, 2, 3, 4 dans leur support 5 à 8 disposés en étoile.

Afin de permettre les associations illustrées sur les figures 13a et 13b, chaque support isolant comporte de part et d'autre de la barre disposée à plat, ou de la base 22 du U précité, des moyens de fixation à un autre support, ceci permettant une disposition des barres les unes à côté des autres, parallèlement les unes aux autres.

Cette fixation dans cette position est réalisée par l'intermédiaire de deux flancs 23,24 longitudinaux en regard appartenant respectivement à deux supports disposés côte à côte, ces flancs comportant les clips et glissières précités.

Selon cette réalisation particulière, ces clips présentent une section transversale comportant une partie semi-circulaire reliée à la partie principale du support isolant par une portion rectangulaire.

Afin de permettre la réalisation d'une association de barres selon la figure 13d, chaque support isolant 5 à 8 comporte à l'une de ses extrémités à la fois un clip et une glissière, ces deux éléments s'étendant suivant deux directions sensiblement perpendiculaires l'une par rapport à l'autre.

Tel qu'illustré sur la figure 14, des entretoises 25 sous forme d'accessoire peuvent être utilisées entre deux supports isolants et utilisent les clips 15 ou glissières 16 latérales des supports isolants 5 à 8 pour leur fixation, de manière à réaliser différents entre axe de position des barres entre elles afin de permettre l'utilisation de celles-ci en fonction de différentes normes.

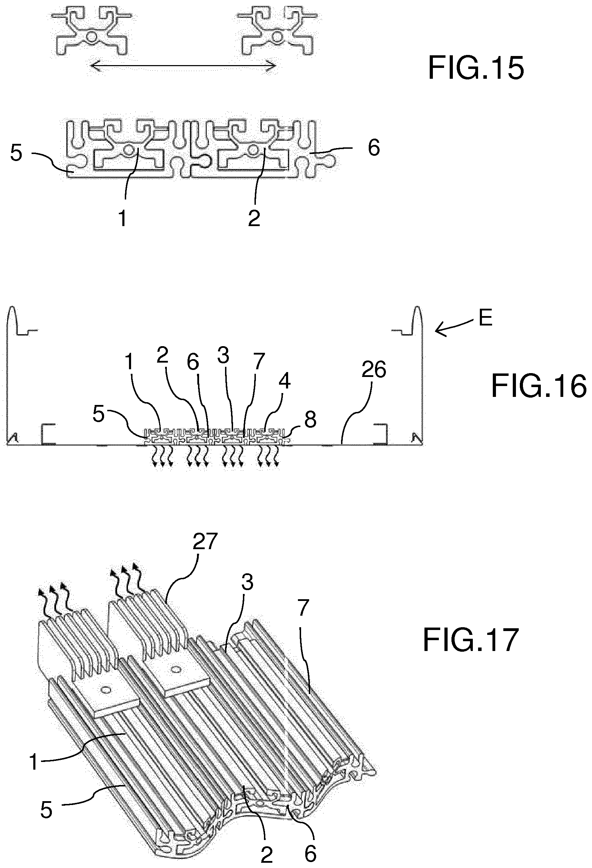

Tel qu'illustré sur la figure 15, l'isolation obtenue grâce au support isolant 5 à 8 de chacune des barres 1 à 4 permet d'éviter de trop grandes distances dans l'air et permet donc d'améliorer la compacité de la solution.

Tel qu'illustré sur la figure 16, l'association à plat des supports isolants 5 à 8 permet de garder un encombrement limité au minimum du fait de l'isolation complète des barres.

Les supports de jeu de barre sont traditionnellement positionnés transversalement aux barres conductrices et sont définis pour laisser une distance dans l'air et une distance des courant de cheminement suffisantes entre les barres conductrices nues elle-même et par rapport à l'environnement extérieur. L'isolation complète des barres conductrices et l'intégration de la fixation des supports isolants entre eux permet de réduire

au minimum les distances dans l'air et les courants de cheminement permettant d'obtenir une solution compacte supprimant les risques d'arc électrique.

Cet isolant, dont sont constitués les supports, peut être mis en contact avec des parties métalliques 26 d'une enveloppe E. Ce matériau isolant étant conçu de manière à favoriser la dissipation thermique liée au passage du courant, il facilite les échanges thermiques et ces supports, une fois plaqués contre cette paroi d'enveloppe métallique 26 ou autre, favorisent l'échange thermique vers l'extérieur de l'enveloppe E.

Tel qu'illustré sur la figure 17, des radiateurs de dissipation 27 peuvent être placés à l'intérieur des supports isolants 5 à 8, à l'une ou bien aux deux extrémités de chaque barre 1 à 4.

On notera que selon une réalisation particulière, un système de cheminée peut être associé aux barres, de manière à permettre la circulation de flux d'air afin d'optimiser le refroidissement des conducteurs. Ces mêmes cheminées peuvent être associées à des zones de dégagement d'air ou d'arrivée lors de l'installation dans une enveloppe. Ces cheminées permettent la circulation de bas en haut de l'air sur toute la longueur de la barre pour aider à la circulation naturelle ou forcée de l'air ambiant. On notera que des formes particulières peuvent être définies sur le conducteur ou sur les supports isolants afin de favoriser la circulation.

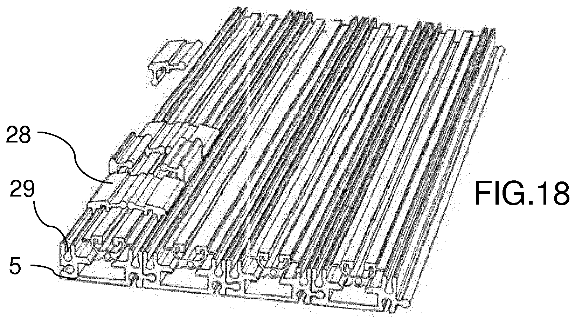

On notera que selon une réalisation particulière, illustré sur la figure 18, le support isolant 5 est conçu pour être équipé d'un couvercle sécable 28 permettant de rendre l'ensemble de la barre conductrice complètement protégé des contacts électriques et de ne laisser passer que les connexions nécessaires au fonctionnement de l'installation. A cet effet, ce support isolant comporte des moyens de clipsage 29 du couvercle 28.

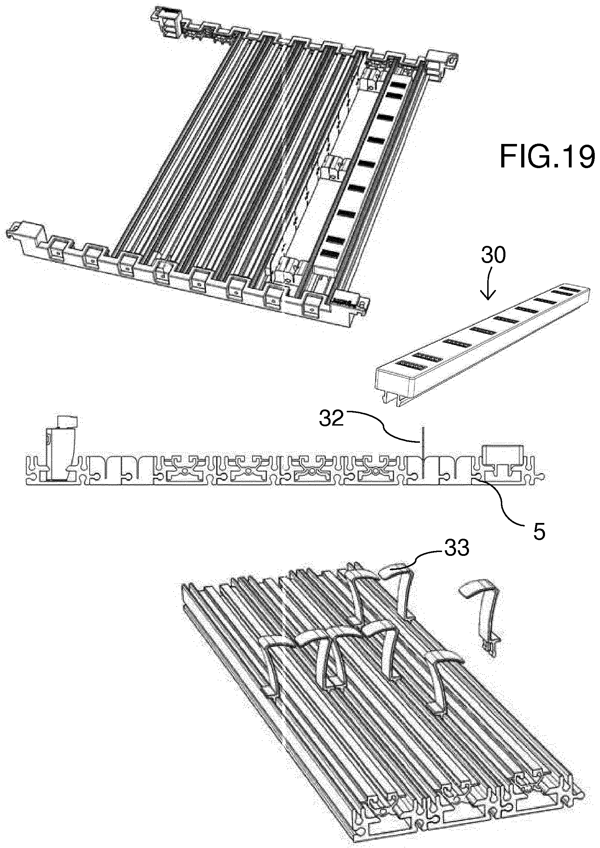

Tel qu'illustré sur la figure 19, un ou plusieurs supports 5 sont utilisés sans barre conductrice à l'intérieur afin de pouvoir y installer à la place des systèmes 30 permettant de gérer la communication à l'intérieur des tableaux ou bien pour gérer des câbles verticalement sachant que le support isolant peut être aussi équipé d'un écran 32 pour préserver des perturbations liées à la compatibilité électromagnétique. La zone de clipsage du couvercle sert

également à recevoir des accessoires de gestion de cales de type bracelets 33 ou autres.

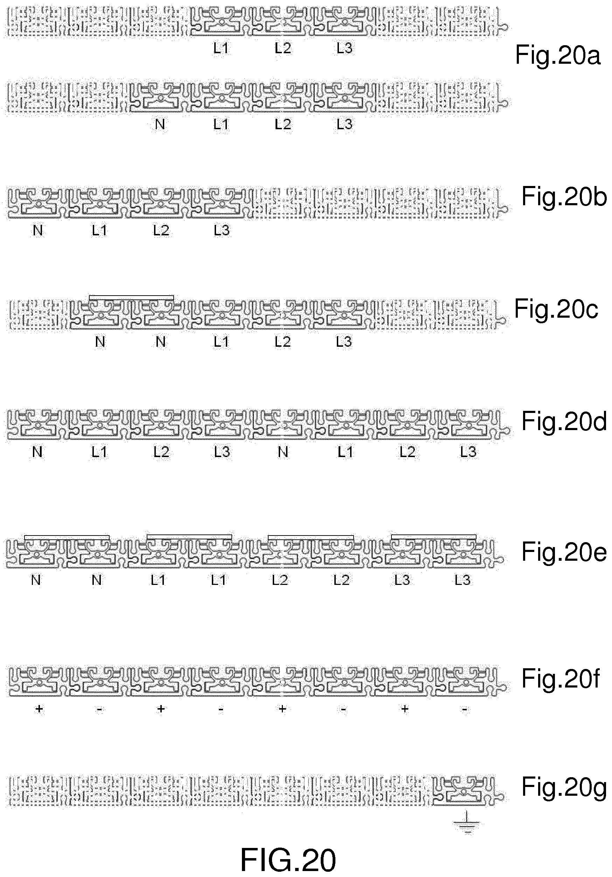

Tel qu'illustré sur la figure 20, l'installation réalisée selon l'invention est conçue pour pouvoir recevoir plusieurs emplacements m de barre permettant de faire une distribution unipolaire, bipolaire, tripolaire ou tétra polaire, sachant que chacune des solutions peut être panachée en fonction des configurations et tout type de schéma électrique.

Ainsi, la figure 20a illustre le fait que l'installation peut être du type unipolaire, bipolaire, tripolaire ou tétra polaire.

La figure 20b illustre le fait que l'installation peut être installée à gauche, au centre, à droite ou de manière répartie par rapport au support transversal.

La figure 20c illustre une installation comportant un double neutre.

La figure 20d illustre une double distribution pour les inverseurs de source.

La figure 20e illustre une installation de barres associées par deux pour chaque type de phase, ceci permettant de doubler la capacité du jeu de barre dans un même encombrement.

La figure 20f illustre une installation dans laquelle est réalisé un mixage de la typologie de courant, ladite installation comprenant un jeu de barres tetra polaire AC avec un jeu de barres bi polaire DC.

La figure 20g illustre une installation selon l'invention, comportant uniquement une barre de mise à la terre.

On notera que des zones de marquage peuvent également être prévues sur le profil du support.

On a donc réalisé selon l'invention une installation de distribution électrique à basse tension sans support intermédiaire, isolé, compact, et modulaire, particulièrement adaptable, robuste et qui peut être équipé d'accessoires.

Bien entendu, l'invention n'est pas limitée aux modes de réalisation décrits et illustrés qui n'ont été donnés qu'à titre d'exemple.

## Revendications

1. Installation de distribution électrique à basse tension comprenant au moins un jeu de barres destinées à être reliées électriquement d'une part à un jeu de barres d'alimentation, ou à un appareillage amont de protection, et d'autre part, à des appareillages d'un équipement électrique, ladite installation comportant, pour chacune d'au moins deux barres (1 à 4), un support isolant (5 à 8) destiné à loger ladite barre sur sensiblement toute sa longueur, ladite installation comportant en outre des traverses (9, 10, 19) et chaque support isolant (5 à 8) comportant des moyens de fixation à un autre support isolant adjacent au premier, le nombre de supports isolants (5 à 8) étant adaptable à la demande, chaque support isolant (5 à 8) situé à l'extrémité d'un groupe de supports isolants, étant destiné à être fixé à au moins un montant (11,12) appartenant à un dispositif de logement des appareillages, par l'intermédiaire d'au moins une traverses (9,10) s'étendant sensiblement perpendiculairement à la direction longitudinale de ladite barre correspondante (1 à 4), ladite au moins une traverse (9, 10, 19) étant configurée à être fixée d'une part au(x) montant(s) (11,12), et d'autre part, audit support isolant (5 à 8) d'une manière permettant d'offrir une accessibilité totale à la surface de connexion de la barre et de manière que l'ensemble comportant les montants (11,12), les traverse(s) (9,10,19) et les supports isolants (5 à 8) logeant les barres, forment un ensemble rigide, les moyens de fixations précités comportant un clip (15) ou une glissière (16) prévu sur un support isolant (5 à 8) coopérant avec respectivement une glissière (16) ou un clip (15) prévu sur un support isolant (5 à 8) adjacent au premier, lesdits clips (15) et glissières (16) étant conçus pour maintenir les barres (1 à 4) les unes par rapport aux autres, et de manière à obtenir le niveau de tenue électrodynamique requis par l'installation, les supports isolants présentant sur leurs faces latérales respectivement le clip (15) et la glissière (16) sur toute la longueur des supports isolants.

2. Installation selon la revendication 1, **caractérisée en ce qu'**elle comporte deux traverses dites respectivement supérieure (9) et inférieure (10) destinées à être fixées sur leur longueur, aux extrémités des barres (1 à 4) et de leurs supports isolants respectifs (5 à 8), et par leurs deux extrémités opposées respectivement, aux deux montants (11,12) appartenant au dispositif de logement précité.

3. Installation selon la revendication 1, **caractérisée en ce qu'**elle comporte au moins un ensemble de deux traverses intermédiaires (19), ou pattes de fixation, fixées respectivement par l'une de leurs extrémités, aux deux supports isolants (5 à 8) situés respectivement aux deux extrémités d'un groupe de supports isolants, et par leur extrémité opposée respectivement, à deux montants (11,12) appartenant au dispositif de logement précité.

4. Installation selon la revendication 3, **caractérisée en ce que** les moyens de fixation des supports isolant (5 à 8) aux traverses intermédiaires (19) ou pattes de fixation, comportent le clip (15) ou la glissière (16) prévu sur le support isolant coopérant avec respectivement une glissière (16) ou un clip (15) prévu sur la traverse intermédiaire (19).

5. Installation selon l'une quelconque des revendications précédentes, **caractérisée en ce que** le ou chaque support isolant (5 à 8) comporte un profile présentant une section transversale sensiblement en forme de U, ledit profilé comportant une base (22) destinée à recevoir la barre correspondante (1 à 4) positionnée à plat, et deux flancs (23,24) s'étendant sensiblement perpendiculairement à ladite barre (1 à 4).

6. Installation selon la revendication 5, **caractérisée en ce que** les flancs précités (23,24) comportent les moyens de fixation précités (15,16).

7. Installation selon la revendication 6, **caractérisé en ce que** l'un des flancs (23,24) comporte un clip (15) tandis que l'autre des flancs comporte une glissière (16).

8. Installation selon l'une quelconque des revendications précédentes, **caractérisée en ce que** les barres (1 à 4) et leurs supports isolants (5 à 8) associés sont disposés à plat sensiblement dans un même plan.

9. Installation selon l'une quelconque des revendications précédentes, **caractérisée en ce qu'**il comporte au moins un support isolant (5 à 8) logeant un bouchon isolant (20) de manière à définir deux portions de barre conductrices différentes (1,1').

10. Installation selon l'une quelconque des revendications précédentes, **caractérisée en ce que** la ou chaque traverse (9,10, 19) comporte au niveau du raccordement à une barre (1 à 4), une zone de repérage (21) apte à spécifier la valeur de la distribution de courant.

11. Installation selon l'une quelconque des revendications précédentes, **caractérisée en ce qu'**elle comporte un jeu de barres dit en carré comprenant deux ensembles (e, f) de deux supports isolants (5,6 et 7,8) fixés l'un à l'autre par l'une de leurs faces latérales (23,24) ou flancs, ces deux ensembles (e,f) étant disposés dos à dos de manière à former un carré.

12. Installation selon l'une la revendication 7, **caractérisée en ce que** quatre au moins des supports isolants (5 à 8) comportent sur l'un de leurs flancs (23,24) à la fois un clip (15) et une glissière (16), lesdits clip et glissière s'étendant suivant une direction sensiblement perpendiculaire l'un par rapport à l'autre, et **en ce que** ces quatre supports (5 à 8) sont fixés l'un à l'autre de manière à former une croix.

13. Installation selon l'une quelconque des revendications précédentes,
**caractérisée en ce qu'**il comporte au moins une entretoise (25) sous forme d'accessoire s'étendant sensiblement sur une même longueur que les barres, apte à être placée entre deux supports isolants adjacents et à être fixées à ces deux supports isolants au moyen des mêmes moyens de fixation que s'il s'agissait d'un support isolant.

14. Installation selon l'une quelconque des revendications précédentes,
**caractérisée en ce que** le ou chaque support isolant (5 à 8) est réalisé dans un matériau isolant présentant la propriété de favoriser la dissipation thermique liée au passage du courant.

15. Installation selon les revendications 8 et 14, **caractérisée en ce que** les supports isolants (5 à 8) sont plaqués contre une paroi (26) d'enveloppe métallique E favorisant l'échange thermique vers l'extérieur de l'enveloppe E.

16. Installation selon l'une quelconque des revendications précédentes,
**caractérisée en ce qu'**elle comporte au moins un radiateur de dissipation d'énergie (27) placé à l'intérieur d'un support isolant (5 à 8), à l'une des extrémités d'une barre (1 à 4).

17. Installation selon l'une quelconque des revendications précédentes, **caractérisée en ce que** le ou chaque support isolant (5 à 8) comporte des moyens de fixation à un couvercle sécable (28) et/ou à un ou plusieurs accessoires de gestion de câbles (33).

18. Installation selon l'une quelconque des revendications précédentes, **caractérisée en ce qu'**elle comporte au moins un support isolant logeant un système (30) permettant de gérer la communication à l'intérieur du dispositif de logement précité ou bien un câble (31).

19. Installation selon l'une quelconque des revendications précédentes, **caractérisée en ce qu'**elle comporte huit emplacements (m) de supports isolants aptes à recevoir chacun un support isolant (5 à 8) destiné à loger une barre, un câble ou un accessoire, ladite barre étant destinée à véhiculer soit une phase, soit le neutre, soit la terre, de manière à permettre la réalisation d'une installation unipolaire ou bipolaire ou tripolaire ou tétra polaire, lesdites barres et leur support associés étant aptes à être disposés à gauche, au centre, à droite ou de manière répartie sur la largeur de l'emplacement, ladite installation pouvant comporter un double neutre ou une double distribution ou un doublage de la capacité du jeu de barres ou un mixage de la typologie du courant.

## Patentansprüche

1. Niederspannungs-Stromverteilungsanlage, welche mindestens eine Sammelschiene umfasst, die dazu bestimmt ist, einerseits mit einer Versorgungsschiene oder mit einer vorgeschalteten Schutzeinrichtung und andererseits mit Einrichtungen eines elektrischen Gerätes elektrisch verbunden zu werden, wobei die Anlage für jede von mindestens zwei Schienen (1 bis 4) einen isolierenden Träger (5 bis 8) aufweist, der dazu bestimmt ist, die Schiene im Wesentlichen auf ihrer gesamten Länge aufzunehmen, wobei die Anlage außerdem Querstreben (9, 10, 19) aufweist und jeder isolierende Träger (5 bis 8) Mittel zur Befestigung an einem anderen isolierenden Träger, der dem ersten benachbart ist, aufweist, wobei die Anzahl isolierender Träger (5 bis 8) an den Bedarf anpassbar ist, wobei jeder isolierende Träger (5 bis 8), der sich am Ende einer Gruppe von isolierenden Trägern befindet, dazu bestimmt ist, an mindestens einem Ständer (11, 12), der zu einer Aufnahmevorrichtung der Einrichtungen gehört, durch mindestens eine Querstrebe (9, 10) befestigt zu werden, die sich im Wesentlichen senkrecht zur Längsrichtung der entsprechenden Schiene (1 bis 4) erstreckt, wobei die mindestens eine Querstrebe (9, 10, 19) dafür ausgelegt ist, einerseits an dem (den) Ständer(n) (11, 12) und andererseits an dem isolierenden Träger (5 bis 8) auf eine Weise befestigt zu werden, welche ermöglicht, eine vollständige Zugänglichkeit der Verbindungsfläche der Schiene zu bewirken, und so, dass die Anordnung, welche die Ständer (11, 12), die Querstrebe(n) (9, 10, 19) und die isolierenden Träger (5 bis 8), welche die Schienen aufnehmen, umfasst, eine starre Anordnung bildet, wobei die vorgenannten Befestigungsmittel einen Clip (15) oder eine Gleitschiene (16), der bzw. die an einem isolierenden Träger (5 bis 8) vorgesehen ist und mit einer Gleitschiene (16) bzw. einem Clip (15) zusammenwirkt, die bzw. der an einem isolierenden Träger (5 bis 8) vorgesehen ist, der dem ersten benachbart ist, aufweisen, wobei die Clips (15) und Gleitschienen (16) dafür ausgebildet sind, die Schienen (1 bis 4) relativ zueinander zu halten, und so, dass das für die Anlage erforderliche Niveau der elektrodynamischen Festigkeit erreicht wird, wobei die isolierenden Träger an ihren lateralen Seiten den Clip (15) bzw. die Gleitschiene (16) auf der gesamten Länge der isolierenden Träger aufweisen.

2. Anlage nach Anspruch 1, **dadurch gekennzeichnet, dass** sie zwei Querstreben aufweist, obere (9) bzw. untere (10) Querstrebe genannt, die dazu bestimmt sind, auf ihrer Länge an den Enden der Schienen (1 bis 4) und ihrer jeweiligen isolierenden Träger (5 bis 8) befestigt zu werden, und durch ihre zwei gegenüberliegenden Enden an jeweils einem der zwei Ständer (11, 12), die zu der vorgenannten Aufnahmevorrichtung gehören.

3. Anlage nach Anspruch 1, **dadurch gekennzeichnet, dass** sie mindestens eine Anordnung von zwei Zwischenquerstreben (19) oder Befestigungslaschen aufweist, die mit einem ihrer Enden an jeweils einem der zwei isolierenden Träger (5 bis 8) befestigt sind, die sich an jeweils einem der zwei Enden einer Gruppe von isolierenden Trägern befinden, und mit ihrem gegenüberliegenden Ende an jeweils einem der zwei Ständer (11, 12), die zu der vorgenannten Aufnahmevorrichtung gehören.

4. Anlage nach Anspruch 3, **dadurch gekennzeichnet, dass** die Mittel zur Befestigung der isolierenden Träger (5 bis 8) an den Zwischenquerstreben (19) oder Befestigungslaschen den Clip (15) oder die Gleitschiene (16) aufweisen, der bzw. die an dem isolierenden Träger vorgesehen ist und mit einer Gleitschiene (16) bzw. einem Clip (15) zusammenwirkt, die bzw. der an der Zwischenquerstrebe (19) vorgesehen ist.

5. Anlage nach einem der vorhergehenden Ansprüche, **dadurch gekennzeichnet, dass** der oder jeder isolierende Träger (5 bis 8) ein Profil aufweist, das einen im Wesentlichen U-förmigen Querschnitt aufweist, wobei das Profilteil einen Steg (22) aufweist, der dazu bestimmt ist, die entsprechende Schiene (1 bis 4) aufzunehmen, die flach positioniert ist, und zwei Schenkel (23, 24), die sich im Wesentlichen senkrecht zu der Schiene (1 bis 4) erstrecken.

6. Anlage nach Anspruch 5, **dadurch gekennzeichnet, dass** die vorgenannten Schenkel (23, 24) die vorgenannten Befestigungsmittel (15, 16) aufweisen.

7. Anlage nach Anspruch 6, **dadurch gekennzeichnet, dass** einer der Schenkel (23, 24) einen Clip (15) aufweist, während der andere der Schenkel eine Gleitschiene (16) aufweist.

8. Anlage nach einem der vorhergehenden Ansprüche, **dadurch gekennzeichnet, dass** die Schienen (1 bis 4) und ihre zugeordneten isolierenden Träger (5 bis 8) flach im Wesentlichen in derselben Ebene angeordnet sind.

9. Anlage nach einem der vorhergehenden Ansprüche, **dadurch gekennzeichnet, dass** sie mindestens einen isolierenden Träger (5 bis 8) aufweist, der einen isolierenden Stopfen (20) aufnimmt, um so zwei verschiedene leitende Schienenabschnitte (1, 1') zu definieren.

10. Anlage nach einem der vorhergehenden Ansprüche, **dadurch gekennzeichnet, dass** die oder jede Querstrebe (9, 10, 19) am Anschluss an eine Schiene (1 bis 4) einen Markierungsbereich (21) aufweist, der geeignet ist, den Wert der Stromverteilung anzugeben.

11. Anlage nach einem der vorhergehenden Ansprüche, **dadurch gekennzeichnet, dass** sie eine quadratisch genannte Sammelschiene aufweist, die zwei Anordnungen (e, f) von zwei isolierenden Trägern (5, 6 und 7,8) umfasst, die durch eine ihrer lateralen Seiten (23, 24) oder Schenkel aneinander befestigt sind, wobei diese zwei Anordnungen (e, f) Rücken an Rücken angeordnet sind, um so ein Quadrat zu bilden.

12. Anlage nach Anspruch 7, **dadurch gekennzeichnet, dass** mindestens vier der isolierenden Träger (5 bis 8) an einem ihrer Schenkel (23, 24) gleichzeitig einen Clip (15) und eine Gleitschiene (16) aufweisen, wobei sich der Clip und die Gleitschiene in Richtungen erstrecken, die im Wesentlichen senkrecht zueinander sind, und dadurch, dass diese vier Träger (5 bis 8) so aneinander befestigt sind, dass sie ein Kreuz bilden.

13. Anlage nach einem der vorhergehenden Ansprüche, **dadurch gekennzeichnet, dass** sie mindestens eine Abstandsleiste (25) in Form eines Zubehörteils aufweist, die sich im Wesentlichen über dieselbe Länge wie die Schienen erstreckt, zwischen zwei benachbarten isolierenden Trägern angeordnet werden kann und an diesen zwei isolierenden Trägern mittels derselben Befestigungsmittel befestigbar ist, wie wenn es sich um einen isolierenden Träger handeln würde.

14. Anlage nach einem der vorhergehenden Ansprüche, **dadurch gekennzeichnet, dass** der oder jeder isolierende Träger (5 bis 8) aus einem isolierenden Material hergestellt ist, das die Eigenschaft aufweist, dass es die mit dem Fluss des Stroms verbundene Wärmeableitung begünstigt.

15. Anlage nach den Ansprüchen 8 und 14, **dadurch gekennzeichnet, dass** die isolierenden Träger (5 bis 8) gegen eine Wand (26) einer metallischen Hülle E gedrückt werden, die den Wärmeaustausch mit dem Äußeren der Hülle E begünstigt.

16. Anlage nach einem der vorhergehenden Ansprüche, **dadurch gekennzeichnet, dass** sie mindestens einen Energieabstrahler (27) aufweist, der im Inneren eines isolierenden Trägers (5 bis 8) an einem der Enden einer Schiene (1 bis 4) angeordnet ist.

17. Anlage nach einem der vorhergehenden Ansprüche, **dadurch gekennzeichnet, dass** der oder jeder isolierende Träger (5 bis 8) Mittel zur Befestigung an einer teilbaren Abdeckung (28) und/oder an einem oder mehreren Zubehörteilen zum Kabelmanagement (33) aufweist.

18. Anlage nach einem der vorhergehenden Ansprüche, **dadurch gekennzeichnet, dass** sie mindestens einen isolierenden Träger aufweist, der ein System (30), welches ermöglicht, die Kommunikation im Inneren der vorgenannten Aufnahmevorrichtung zu verwalten, oder auch ein Kabel (31) aufnimmt.

19. Anlage nach einem der vorhergehenden Ansprüche, **dadurch gekennzeichnet, dass** sie acht Einbauorte (m) isolierender Träger aufweist, die geeignet sind, jeweils einen isolierenden Träger (5 bis 8) aufzunehmen, der dazu bestimmt ist, eine Schiene, ein Kabel oder ein Zubehörteil aufzunehmen, wobei die Schiene dazu bestimmt ist, entweder eine Phase oder den Nullleiter oder den Schutzleiter zu transportieren, um so die Herstellung einer einpoligen oder zweipoligen oder dreipoligen oder vierpoligen Anlage zu ermöglichen, wobei die Schienen und ihre zugeordneten Träger links, in der Mitte, rechts oder über die Breite des Einbauortes verteilt angeordnet werden können, wobei die Anlage einen doppelten Nullleiter oder eine doppelte Verteilung oder eine Verdopplung der Kapazität der Sammelschiene oder eine Mischung der Stromarten aufweisen kann.

## Claims

1. Low-voltage electrical distribution installation comprising at least one busbar intended to be linked electrically on the one hand to a power supply busbar, or to an upstream protection switchgear, and on the other hand, to switchgears of an electrical equipment item, said installation comprising, for each of at least two bars (1 to 4), an insulating support (5 to 8) intended to house said bar over substantially all of its length, said installation further comprising crossmembers (9, 10, 19) and each insulating support (5 to 8) comprising means for fixing to another insulating support adjacent to the first, the number of insulating supports (5 to 8) being able to be adapted to demand, each insulating support (5 to 8) situated at the end of a group of insulating supports being intended to be fixed to at least one upright (11, 12) belonging to a device housing the switchgears, via at least one crossmember (9, 10) extending substantially at right angles to the longitudinal direction of said corresponding bar (1 to 4), said at least one crossmember (9, 10, 19) being configured to be fixed on the one hand to the upright(s) (11, 12), and on the other hand, to said insulating support (5 to 8) in a way that makes it possible to offer total accessibility to the connection surface of the bar and such that the assembly comprising the uprights (11, 12), the crossmember(s) (9, 10, 19) and the insulating supports (5 to 8) housing the bars forms a rigid assembly, the abovementioned fixing means comprising a clip (15) or a runner (16) provided on an insulating support (5 to 8) respectively cooperating with a runner (16) or a clip (15) provided on an insulating support (5 to 8) adjacent to the first, said clips (15) and runners (16) being designed to hold the bars (1 to 4) relative to one another, and to obtain the level of electrodynamic withstand strength required by the installation, the insulating supports having, on their lateral faces, the clip (15) and the runner (16), respectively, over all of the length of the insulating supports.

2. Installation according to Claim 1, **characterized in that** it comprises two crossmembers, referred to as top crossmember (9) and bottom crossmember (10), respectively, intended to be fixed over their length, to the ends of the bars (1 to 4) and of their respective insulating supports (5 to 8), and by their two opposite ends respectively to the two uprights (11, 12) belonging to the abovementioned housing device.

3. Installation according to Claim 1, **characterized in that** it comprises at least one assembly of two intermediate crossmembers (19), or fixing lugs, fixed respectively by one of their ends, to the two insulating supports (5 to 8) situated respectively at the two ends of a group of insulating supports, and by their opposite end respectively, to two uprights (11, 12) belonging to the abovementioned housing device.

4. Installation according to Claim 3, **characterized in that** the means for fixing the insulating supports (5 to 8) to the intermediate crossmembers (19) or fixing lugs comprise the clip (15) or the runner (16) provided on the insulating support cooperating respectively with a runner (16) or a clip (15) provided on the intermediate crossmember (19).

5. Installation according to any one of the preceding claims, **characterized in that** the or each insulating support (5 to 8) comprises a structural member having a substantially U-shaped cross section, said structural member comprising a base (22) intended to receive the corresponding bar (1 to 4) positioned flat, and two flanks (23, 24) extending substantially at right angles to said bar (1 to 4).

6. Installation according to Claim 5, **characterized in that** the abovementioned flanks (23, 24) comprise the abovementioned fixing means (15, 16).

7. Installation according to Claim 6, **characterized in that** one of the flanks (23, 24) comprises a clip (15) while the other of the flanks comprises a runner (16).

8. Installation according to any one of the preceding claims, **characterized in that** the bars (1 to 4) and their associated insulating supports (5 to 8) are positioned flat substantially in the same plane.

9. Installation according to any one of the preceding claims, **characterized in that** it comprises at least one insulating support (5 to 8) housing an insulating plug (20) so as to define two different conductive bar portions (1, 1').

10. Installation according to any one of the preceding claims, **characterized in that** the or each crossmember (9, 10, 19) comprises, at the connection to a bar (1 to 4), a marking zone (21) capable of specifying the current distribution value.

11. Installation according to any one of the preceding claims, **characterized in that** it comprises a so-called square busbar comprising two assemblies (e, f) of two insulating supports (5, 6 and 7, 8) fixed to one another by one of their lateral faces (23, 24) or flanks, these two assemblies (e, f) being positioned back-to-back so as to form a square.

12. Installation according to Claim 7, **characterized in that** at least four of the insulating supports (5 to 8) comprise, on one of their flanks (23, 24), both a clip (15) and a runner (16), said clip and runner extending in a direction substantially at right angles to one another, and **in that** these four supports (5 to 8) are fixed to one another so as to form a cross.

13. Installation according to any one of the preceding claims, **characterized in that** it comprises at least one spacer (25) in the form of an accessory extending substantially over the same length as the bars, capable of being placed between two adjacent insulating supports and of being fixed to these two insulating supports by means of the same fixing means as if it were an insulating support.

14. Installation according to any one of the preceding claims, **characterized in that** the or each insulating support (5 to 8) is produced in an insulating material exhibiting the property of promoting the heat dissipation linked to the flow of the current.

15. Installation according to Claims 8 and 14, **characterized in that** the insulating supports (5 to 8) are pressed against a wall (26) of a metal enclosure E promoting the heat exchange to the outside of the enclosure E.

16. Installation according to any one of the preceding claims, **characterized in that** it comprises at least one energy dissipating heat sink (27) placed inside an insulating support (5 to 8), at one of the ends of a bar (1 to 4).

17. Installation according to any one of the preceding claims, **characterized in that** the or each insulating support (5 to 8) comprises means for fixing to a divisible cover (28) and/or to one or more cable management accessories (33).

18. Installation according to any one of the preceding claims, **characterized in that** it comprises at least one insulating support housing a system (30) making it possible to manage communication inside the abovementioned housing device or else a cable (31).

19. Installation according to any one of the preceding claims, **characterized in that** it comprises eight insulating support positions (m) capable of each receiving an insulating support (5 to 8) intended to house a bar, a cable or an accessory, said bar being intended to convey either a phase, or the neutral, or the earth, so as to allow the production of a single-pole or two-pole or three-pole or four-pole installation, said bars and their associated support being capable of being arranged on the left, at the centre, on the right or distributed over the width of the position, said installation being able to comprise a double neutral or a double distribution or a doubling of the capacity of the busbar or a mixing of the current typology.
